# FASCICULE DE BREVET EUROPEEN

(11) **EP 3 661 396 B1**
(45) Date de publication et mention de la délivrance du brevet: **21.07.2021**
(21) Numéro de dépôt: 18734814.9
(22) Date de dépôt: 28.06.2018
(51) Int. Cl.: A47J 37/06

(54) **APPAREIL POUR LA PRÉPARATION D'ALIMENTS CUITS EN PARTIES DÉCOUPÉES ET EN PRÉSENCE DE MATIÈRE GRASSE**
VORRICHTUNG ZUR ZUBEREITUNG VON IN GEGENWART VON FETT GEKOCHTEN ZERKLEINERTEN LEBENSMITTELN
APPLIANCE FOR PREPARING CHOPPED-UP FOOD COOKED IN THE PRESENCE OF FAT

(30) Priorité: 04.07.2017 BE 201705476
(43) Date de publication de la demande: 10.06.2020
(73) Titulaire: Donfut, Philippe, 5060 Sambreville (BE)
(72) Inventeur: Donfut, Philippe, 5060 Sambreville (BE)
(74) Mandataire: Gevers Patents
(86) Numéro de dépôt international: PCT/EP2018/067440
(87) Numéro de publication internationale: WO 2019/007807

(56) Documents cités:
- US-A- 4 187 770
- US-A- 5 289 760
- US-A1- 2008 213 447
- US-A1- 2013 156 906
- US-A1- 2016 316 525

## Description

### Domaine de l'invention

La présente invention se rapporte au domaine technique des appareils domestiques de préparation d'aliments cuits et en particulier des appareils conçus pour cuire des aliments en présence de matière grasse.

La présente invention concerne un appareil domestique destiné à préparer des aliments cuits en parties découpées et en présence de matière grasse, tels que des chips, à partir d'aliments crus entiers, tels que des pommes de terre entières.

### Description de l'art antérieur

Le document US 2013/156906 décrit un appareil de cuisson décrivant les caractéristiques du préambule de la revendication 1. Le document EP 1 781 155 divulgue un appareil domestique de cuisson d'aliments en présence de matière grasse dans lequel les aliments sont cuits à l'aide d'un flux d'air chaud après avoir été enduits d'une matière grasse déversée sur les aliments à l'intérieur de la chambre de cuisson. Cet appareil diffère donc d'une friteuse classique à bain d'huile en ce qu'il réalise une cuisson sèche, c'est-à-dire une cuisson dans laquelle les aliments sont mouillés par un médium de cuisson, tel que de l'huile, mais sans pour autant être plongés ou baigner dans ledit médium. Cet appareil permet donc de contrôler la quantité de matière grasse utilisée pour la cuisson et peut par ailleurs être configuré pour recevoir une cartouche de matière grasse amovible et à usage unique, achetée au préalable dans le commerce. Cet appareil ne peut cependant recevoir dans sa chambre de cuisson que des aliments prêts à la cuisson sèche, c'est-à- dire lavés et coupés de manière appropriée au préalable. Il n'est donc pas adapté pour recevoir des aliments crus à l'état brut, tels que des pommes de terre entières, en vue de préparer par exemple des chips ou des frites prêts à la consommation.

Le document US 2008/0206420 divulgue un appareil de friture à cuisson sèche dans lequel une recirculation d'air chaud est mise en œuvre. De l'air est en effet pompé dans la chambre de cuisson et est réintroduit à l'intérieur de celle-ci après avoir été chauffé. De plus le flux d'air chauffant est acheminé à l'aide de plusieurs conduits et à travers plusieurs ouïes de sortie vers la chambre de cuisson, de manière à générer plusieurs veines d'air chaud qui convergent les unes vers les autres. Ces veines convergeant de manière opposée contribuent à un excellent échange thermique avec les aliments, car elles génèrent ou favorisent, à leur point de rencontre, l'apparition de turbulences favorables à la transmission de chaleur.

Le document US 5,289,760 divulgue un appareil pour préparer des chips ou des frites prêts à la consommation à partir de pommes de terre. L'appareil comprend donc à la fois une chambre de découpe dans laquelle se trouve un organe de coupe, qui est une lame rotative coupante, et un récipient rempli d'huile de friture pour la cuisson des parties découpées, qui sont typiquement des chips ou des frites de pomme de terre. Les parties découpées dans la chambre de découpe sont entrainées vers le récipient rempli d'huile de friture dans un premier temps par gravité et ensuite sous l'action d'une aube rotative se trouvant sous la chambre de découpe et fixée à l'axe de rotation de l'organe de coupe. Les chips ou frites sont alors frits dans un bain d'huile, ayant été préchauffé préalablement. Un tel type de cuisson met en œuvre une importante quantité d'huile. Cela implique des difficultés de manipulation pour l'utilisateur lorsqu'il remplit sa friteuse, lorsqu'il la déplace et surtout lorsqu'il la vide. Ce bain de cuisson à haute température est également source de risque de brûlures, que ce soit par projections hors de la cuve de l'appareil ou par suite d'une maladresse de l'utilisateur. Ce risque de brûlures ou d'accidents est accru par le fait qu'une quantité aussi importante d'huile nécessite, avant d'introduire les aliments dans la cuve pour les frire, une phase de préchauffage relativement longue. Cela peut conduire l'utilisateur à oublier son bain d'huile en phase de préchauffe, avec toutes les conséquences néfastes que cette absence de surveillance pourrait engendrer. De plus, dans un tel type d'appareil, il n'est pas possible pour l'utilisateur de maitriser de façon précise les quantités de matière grasse utilisée pour la cuisson, ce qui conduit généralement, à l'issue du processus de cuisson, à l'obtention d'aliments très riches en matière grasse. Ainsi, des aliments cuits dans les conditions précitées sont considérés comme présentant généralement un goût agréable, mais n'étant pas recommandables du point de vue de la santé, car trop imprégnés de graisse. De plus, les friteuses à bain d'huile s'avèrent d'un usage relativement coûteux, puisqu'elles nécessitent l'achat régulier d'une grande quantité d'huile (au minimum 1,5 à 2 L d'huile sont en effet généralement nécessaires pour frire 1Kg de morceaux de pommes de terre fraîches). L'utilisateur est donc naturellement conduit à économiser l'huile en réutilisant plusieurs fois le même bain de cuisson, ce qui est peu satisfaisant du point de vue de l'hygiène et du goût. Enfin, le chauffage à haute température d'une telle quantité d'huile provoque d'une part des dégagements d'odeurs qui peuvent s'avérer particulièrement désagréables, et d'autre part une polymérisation de l'huile qui rend le nettoyage de l'appareil difficile et contraignant.

Le document US 4,251,895 divulgue un système de nettoyage pour une ligne de production de chips de pommes de terre. Après avoir été coupés, les chips tombent un bac d'eau qui permet d'enlever les résidus d'amidon et d'autres particules indésirables se trouvant à la surface des chips fraichement coupés. Les chips sont ensuite transportés sur un tapis roulant où ils sont encore lavés à l'aide d'un pulvérisateur d'eau pour enlever les particules restantes et ensuite passés à-travers un flux d'air pour enlever l'humidité présente à la surface des chips. Les chips tombent ensuite du tapis roulant dans un bain d'huile où est effectuée la cuisson.

### Résumé de l'invention

Un but de la présente invention est de fournir un appareil domestique compact pour la préparation en un temps minimal d'aliments cuits prêts à la consommation et avec des propriétés gustatives avantageuses, tels que des chips, à partir d'aliments entiers et crus, tels que des pommes de terre entières.

Un autre but est de fournir un appareil domestique pour la préparation d'aliments cuits en présence de matière grasse, dans lequel la quantité et la qualité de matière grasse utilisée pour la cuisson sont maitrisées et avec lequel l'utilitisateur peut choisir l'assaisonement qu'il désire appliquer à ses aliments cuits.

Un autre but de l'invention est de fournir un appareil dont l'utilisation ne nécessite qu'un minimum d'interventions de la part de l'utilisateur.

La présente invention est définie dans la revendication indépendante annexée. Les modes de réalisations préférés sont définis dans les revendications dépendentes.

La présente invention se rapporte à un appareil domestique de préparation d'aliments cuits en présence de matière grasse selon la revendication 1.

Selon un mode de réalisation avantageux, le pulvérisateur d'eau comprend un réservoir pour recevoir de l'eau, une pompe et une buse de pulvérisation.

Selon un mode de réalisation avantageux, les moyens d'évacuation comprennent un orifice d'évacuation dans la partie inférieure de la chambre de préparation pour évacuer naturellement l'eau liquide qui s'accumule dans la chambre de préparation, l'orifice d'évacuation débouchant dans un réceptacle à eau pour recevoir l'eau évacuée.

Selon un mode de réalisation avantageux, les moyens de chauffe sont configurés pour générer un flux d'air chaud dans la chambre de préparation. Les moyens de chauffe comprennent alors de préférence au moins un élément calorifique pour chauffer de l'air à proximité dudit élément calorifique et au moins un ventilateur pour diriger l'air chauffé dans la chambre de préparation.

Selon un mode de réalisation avantageux, l'organe de coupe est configuré pour découper ledit aliment cru en parties découpées dans le réceptacle, ledit réceptacle se trouvant au dessus de la chambre de préparation et étant configuré pour que lesdites parties découpées tombent sous l'effet de la gravité dans ladite chambre de préparation.

Selon un mode de réalisation particulièrement avantageux, l'organe de coupe comprend une plaque de coupe actionnable en rotation par un axe relié un moteur électrique, ladite plaque de coupe étant munie de trous traversant définis par des bords, lesdits bords comprenant des bords coupants surélevés par rapport à la surface de la plaque de coupe, de manière à découper des tranches d'un aliment exerçant une pression contre la surface supérieure de la plaque de coupe lors de la rotation dudit axe et à laisser passer lesdites tranches à travers les trous traversant de ladite plaque de coupe. De tels organes de coupe sont par exemple décrits dans le document US 5,289,760. Des moyens de poussée peuvent alors être prévus pour accroitre la pression entre l'aliment et la plaque de coupe.

Selon un mode de réalisation avantageux, l'organe de coupe est connecté fonctionnellement au contrôleur et ledit contrôleur est configuré pour déclencher l'étape de découpe.

Selon un mode de réalisation avantageux, ladite chambre de préparation comprend un récipient amovible pour extraire les aliments préparés par ledit appareil.

Selon un mode de réalisation avantageux, ladite chambre de préparation comprend une partie faite d'un matériau flexible.

Selon un mode de réalisation avantageux, le contrôleur comprend une mémoire de stockage dans laquelle sont préenregistrées différentes recettes comprenant des valeurs prédéterminées pour la puissance calorifique délivrée par les moyens de chauffe et les durées des étapes de séchage et de cuisson.

Selon un mode de réalisation avantageux, l'appareil comprend une sonde reliée au contrôleur pour mesurer la température à l'intérieur de la chambre de préparation, le contrôleur étant configuré pour ajuster la puissance calorifique délivrée par les moyens de chauffe et les durées des étapes de séchage et cuisson sur base des informations de température récoltées par ladite sonde.

### Brève description des figures

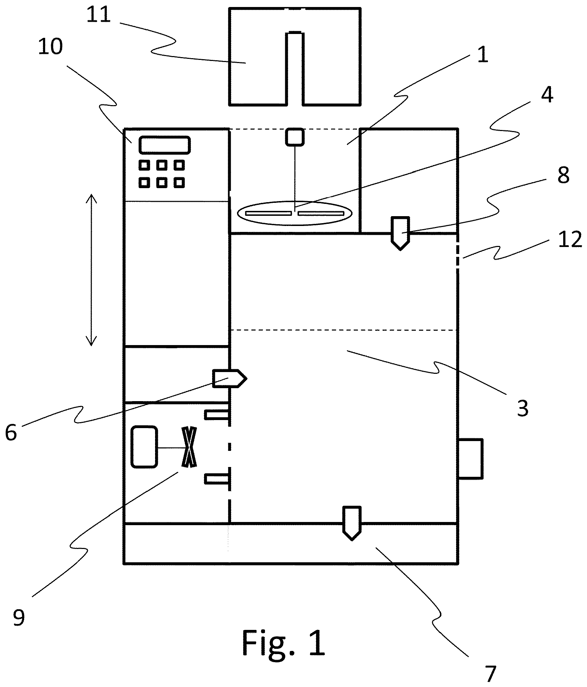

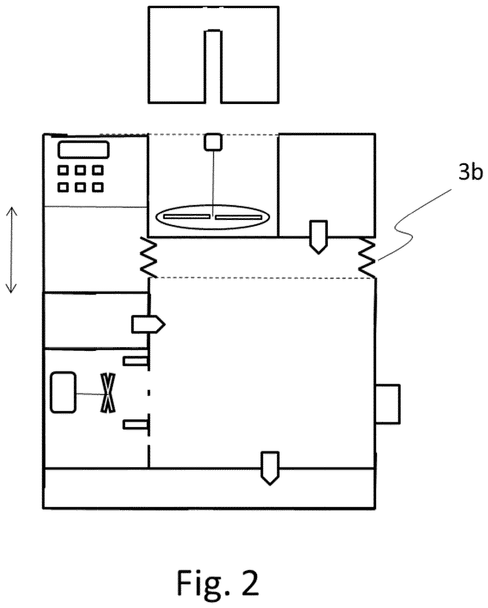

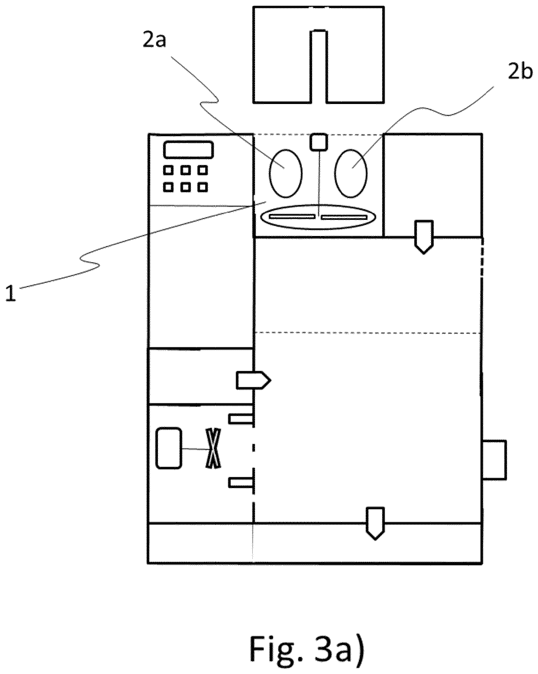

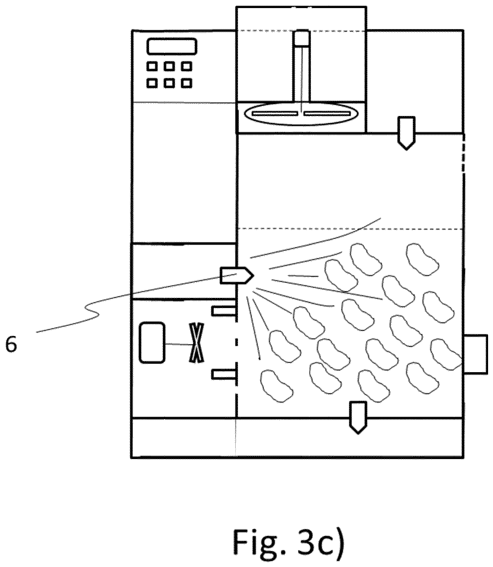

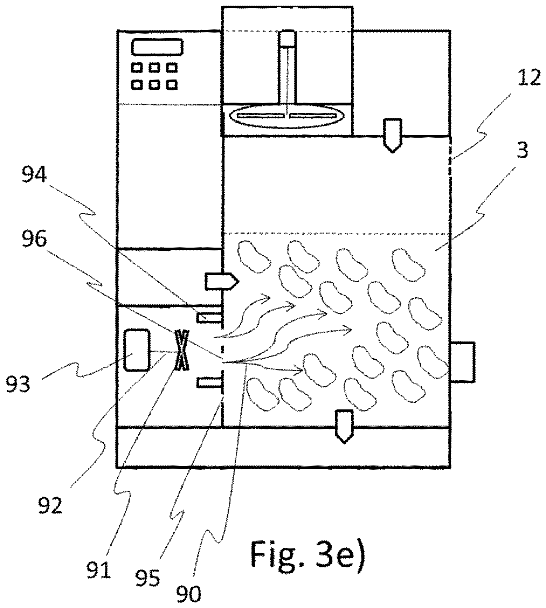

Ces aspects de l'invention et d'autres aspects complémentaires seront expliqués plus en détails au moyen d'exemples et par référence au dessin annexé :
**La** **Figure 1** représente un appareil domestique pour la préparation d'aliments cuits en parties découpées selon l'invention dans une configuration fonctionnelle ;
**La** **Figure 2** représente un appareil domestique pour la préparation d'aliments cuits en parties découpées selon l'invention dans une configuration compacte pour le rangement ;
**Les** **Figures 3a****)-h)** représentent les différentes étapes de préparation mises œuvre par un appareil domestique selon l'invention ;
La figure n'est pas dessinée à l'échelle.

### Description détaillées de modes de réalisation préférés

L'invention se rapporte donc à un appareil domestique de préparation d'aliments cuits en parties découpées et en présence de matière grasse. Comme illustré à la Figure 1, cet appareil comprend:
- un réceptacle 1 pour recevoir au moins un aliment cru 2a, 2b;
- une chambre de préparation 3 ;
- au moins un organe de coupe 4 configuré pour découper ledit aliment cru 2a, 2b en parties découpées 5 et pour transférer lesdites parties découpées 5 dans la chambre de préparation 3;
- un pulvérisateur d'eau 6 pour pulvériser de l'eau sur lesdites parties découpées 4 à l'intérieur de la chambre de préparation 3;
- des moyens d'évacuation 7 pour évacuer l'eau liquide accumulée dans la chambre de préparation 3 ;
- des moyens d'aspersion 8 de matière grasse sur les parties découpées dans la chambre de préparation 3 ;
- des moyens de chauffe 9 pour sécher et cuire lesdites parties découpées 5 dans ladite chambre de préparation 3;
- un contrôleur 10 connecté au pulvérisateur d'eau 6, aux moyens d'aspersion 8 de matière grasse et aux moyens de chauffe 9, ledit contrôleur 10 étant configuré pour que ledit appareil de préparation effectue une étape de pulvérisation d'eau sur lesdites parties découpées 5 dans la chambre de préparation, une étape de séchage desdites parties découpées 5, une étape d'aspersion de matière grasse sur lesdites parties découpées 5 et une étape de cuisson desdites parties découpées 5.

L'appareil selon l'invention permet donc de préparer des aliments cuits en présence de matière grasse, tels que des chips de pomme de terre et ce à partir de pommes de terre entières. Les parties découpées 5 peuvent en effet être des fines tranches ayant les dimensions typiques des chips offertes dans le commerce. Un intérêt de l'appareil selon l'invention est qu'il permet donc de réaliser de manière autonome une grande partie des étapes nécessaires à l'élaboration de chips fraiches à partir de produits bruts tels que des pommes de terre entières, et ce en un temps minimal et sans occasionner d'encombrement important pour l'utilisateur. Pour atteindre cet objectif, l'appareil domestique selon l'invention met en œuvre une pluralités d'étapes essentielles qui aboutissent à la production d'aliments cuits tels que des chips prêtes à la consommation.

Le contrôleur 10 de l'appareil selon l'invention est donc avantageusement un contrôleur électronique apte à effectuer une actuation électromécanique de certains composants de l'appareil selon l'invention et à traiter des informations en provenance d'éventuels capteurs ou sondes qui lui seraient connectés, tels qu'une sonde de température se trouvant dans la chambre de préparation. Le contrôleur 10 comprend par ailleurs avantageusement une interface comprenant un écran d'affichage et des boutons pour que l'utilisateur puisse intéragir avec l'appareil selon l'invention de manière à par exemple sélectionner une recette pré-enregistrée sur le contrôleur ou encore informer le contrôleur sur la nature des aliments introduits dans le réceptacle ou de la qualité de la matière grasse présente dans les moyens d'aspersion 8, le contrôleur 10 pouvant alors sélectionner une recette ou un ensemble de recettes adaptées parmi lesquels l'utilisateur est amené à choisir. Par recette, on entend un ensemble de paramètres impactant les propriétés gustatives et l'apparence des aliments produits par l'appareil, ces paramètres pouvant inclure par exemple le profil de température délivré par les moyens de chauffe, la quantité de matière grasse délivrée durant l'étape d'aspersion, ou encore la forme et les dimensions des parties découpées par l'organe de coupe 4.

Les différentes étapes mises en œuvre par l'appareil selon l'invention sont illustrées aux Figures 3a)-h) dans le cas particulier d'une utilisation de l'appareil pour la fabrication de chips de pommes de terre. Il est cependant important de noter que le même appareil ou des variantes de celui-ci pourraient être utilisés pour fabriquer des chips à base d'autres végétaux tels que du manioc, de la patate douce, de la betterave, de la pomme, de la banane. L'appareil pourrait également être utilisé pour fabriquer des produits voisins des chips comme par exemple des frites de pommes de terre.

A la première étape, illustrée à la Figure 3a), deux pommes de terre 2a), 2b) sont introduites dans le réceptacle 1. Dans le mode de réalisation illustré dans les Figures 1-3, le réceptacle 1 contient en effet deux logements pouvant recevoir chacun une pomme de terre. Dans d'autres modes de réalisation, le réceptacle peut contenir un seul logement ou alternativement plus de deux logements.

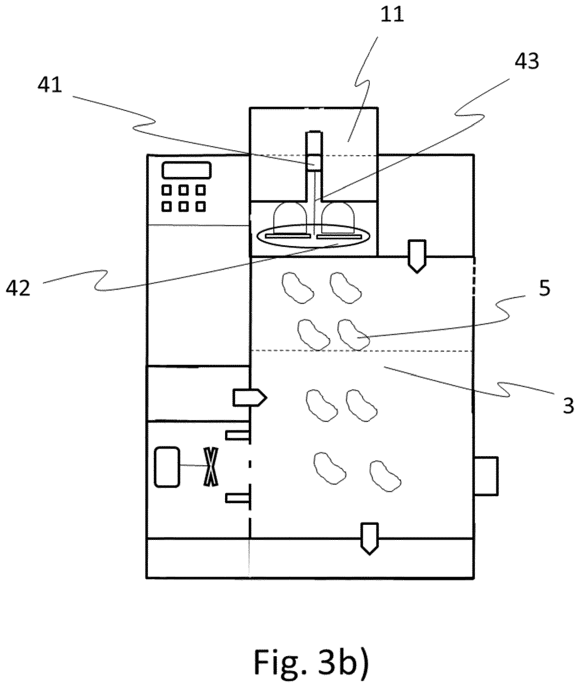

Après l'introduction d'un aliment dans le réceptacle 1, l'organe de coupe 4 peut être actionné et va donc découper l'aliment introduit et transférer celui-ci vers la chambre de préparation 3. L'organe de coupe 4 comprend donc des moyens coupants actionnables pour découper les aliments introduits dans le réceptacle en des parties découpées et les transférer vers la chambre de préparation 3. L'organe de coupe 4 peut être un organe mécanique actionné par l'utilisateur indépendamment du contrôleur 10. L'organe de coupe 4 peut exercer son action de coupe à l'aide d'un moteur électrique ou bien également à l'aide d'un actionnement mécanique exercé par l'utilisateur. Dans certains modes de réalisation, la découpe peut peut être effectuée par une action combinée d'un moteur électrique enclenché directement par l'utilisateur, ou par l'intermédiaire du contrôleur 10 si le moteur lui est connecté de manière opérationnelle, et une action manuelle de l'utilisateur, telle qu'une poussée par exemple. Dans le mode de réalisation illustré à la Figure 3b), l'organe de coupe 4 est du type de ceux décrits dans le document US 5,289,760 (et en particulier représentés aux Figures 11-15 dudit document), et comprend un moteur 41 et une plaque de coupe 42 réliée au moteur par un arbre 43, qui permettent de découper de fines tranches 5 de pommes de terre, ayant les dimensions typiques de chips. La plaque de coupe 42 est en effet munie de trous traversant définis par des bords, parmi lesquels on trouve des bords coupants surélevés par rapport à la surface de la plaque de coupe. Ces bords coupants surélevés permettent de découper des tranches d'un aliment, ici une pomme de terre 2a), 2b), lorsqu'il exerce une pression contre la surface supérieure de la plaque de coupe pendant la rotation de l'arbre 43. Si le poids de l'aliment n'est pas assez élevé pour exercer une pression suffisante contre la plaque 42 pour obtenir une découpe de l'aliment 2a), 2b), des moyens de poussée 11 peuvent être utilisés pour accroitre la pression entre l'aliment 2a), 2b) et la plaque de coupe 4. Ces moyens de poussée 11 peuvent exercer leur action de par leur poids propre, ou encore de par une actuation mécanique en translation exercée vers le bas par l'utilisateur ou par un moteur électrique connecté au contrôleur 10. Les trous traversant de la plaque de coupe 42 laissent passer les tranches 5 à travers la plaque de coupe 42, et les tranches 5 tombent alors sous l'action de la gravité dans la chambre de préparation 3. Dans le cas où les moyens de coupe 4 sont connectés de manière fonctionnelle au contrôleur 10 et sont donc actionnés par celui-ci après l'enclenchement d'un programme de préparation par l'utilisateur, l'appareil selon l'invention effectue alors l'intégralité des étapes nécessaires à l'élaboration des aliments cuits en présence de matière grasse, ce qui offre un confort d'utilisation optimal à l'utilisateur.

Une fois l'ensemble des parties découpées de l'aliment 2a), 2b) ayant été transféré dans la chambre de préparation, une étape de pulvérisation d'eau à l'aide du pulvérisateur d'eau 6 est mise en œuvre. Le pulvérisateur d'eau 6 est avantageusement actionné par le contrôleur 10 lorsque ce dernier a détecté que l'étape de découpe était terminée, par exemple à l'aide de capteurs de poids se trouvant dans le réceptacle 1 ou la chambre de préparation 3, ou encore si des moyens de poussée 11 sont prévus, sur base d'un interrupteur de fin course activé dans le réceptacle 1 par les moyens de poussée 11 une fois que l'intégralité des aliments crus a été transférée en partie découpées 5 dans la chambre de préparation 3. Dans un autre mode de réalisation, l'utilisateur peut enclencher lui-même l'étape de pulvérisation d'eau à partir du contrôleur 10 après avoir constaté que l'étape de découpe était terminée.

Outre une action évidente de lavage des parties découpées 5 exercée par l'eau introduite dans la chambre de préparation 3, cette pulvérisation d'eau a une action essentielle sur certains aliments fraichement coupés par l'organe de coupe 4 en vue de la préparation d'aliments cuits prêts à la consommation. En particulier, lorsque les aliments crus introduits contiennent de l'amidon tels que les pommes de terre 2a), 2b), l'eau amenée dans la chambre de préparation sous forme de pulvérisation permet d'enlever efficacement les particules d'amidon accumulées en surface des tranches fraichement coupées. Il a pu être observé qu'il était nécessaire d'effectuer cette étape pour obtenir une cuisson et des propriétés gustatives optimales, en particulier lors de la préparation de chips de pommes de terre à l'aide de l'appareil selon l'invention.

Selon un mode de réalisation avantageux, le pulvérisateur d'eau 6 comprend une pompe, une buse de pulvérisation et un réservoir d'eau. La pompe est avantageusement reliée au contrôleur 10 qui supervise donc son fonctionnement, à savoir son enclenchement et la durée de pulvérisation. Le réservoir d'eau doit être dimensionné pour pouvoir contenir un volume d'eau nécessaire pour la phase de pulvérisation mise en œuvre par l'appareil selon l'invention. De plus, il est avantageusement configuré pour être rempli d'eau aisément par l'utilisateur. Il peut par exemple être amovible. L'utilisateur peut alors le déloger de l'appareil et le remplir d'eau avant de le replacer pour effectuer une préparation l'aide de son appareil.

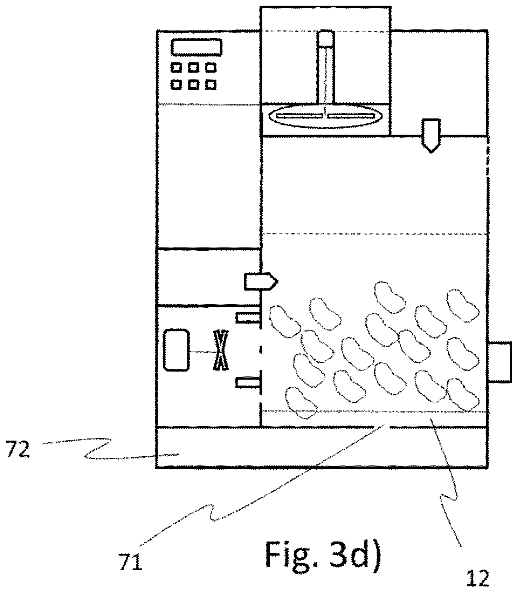

Suite à l'étape de pulvérisation d'eau sur les parties découpées 5, il est nécessaire d'évacuer l'eau liquide 12 qui s'est accumulée dans la chambre de préparation 3, comme illustré à la Figure 3d). Les particules enlevées de la surface des parties découpées, qui se trouvent dans cette eau liquide 12, doivent en effet être évacuées de la chambre de préparation 3. En vue de l'étape de cuisson à venir, il a par ailleurs pu être observé qu'il était hautement avantageux d'évacuer l'eau liquide 12 de la chambre de préparation 3, sans quoi cette eau liquide 12 doit alors être vaporisée durant le processus de cuisson, ce qui ralentit la cuisson, est coûteux d'un point de vue énergétique et n'offre pas des propriétés gustatives satisfaisantes pour les aliments car ils sont alors cuits pendant un temps non négligeable dans de la vapeur d'eau. A cet effet, l'appareil selon l'invention comprend donc des moyens d'évacuation 7 pour évacuer l'eau liquide accumulée dans la chambre de préparation 3. Ces moyens d'évacuation 7 comprennent avantageusement un orifice d'évacuation 71 dans la partie inférieure de la chambre de préparation 3, de manière à évacuer naturellement l'eau liquide 12 qui s'accumule dans la chambre de préparation 3, l'orifice d'évacuation 71 débouchant dans un réceptacle à eau 72 pour recevoir l'eau évacuée. L'orifice 71 peut par ailleurs être muni de moyens d'obturation, tel qu'un clapet d'obturation, pouvant être dans un état ouvert ou fermé et actionnables par le contrôleur 10. De cette manière, l'orifice d'évacuation pourra avantageusement être fermé avant et/ou après l'étape d'évacuation d'eau liquide 12 de la chambre de préparation 3. En particulier, l'orifice d'évacuation 71 sera avantageusement fermé durant les étapes ultérieures de séchage, aspersion de matière grasse et cuisson mises en œuvre par l'appareil selon l'invention, en vue d'isoler thermiquement la chambre de préparation 3 et d'éviter les pertes de matière grasse via l'orifice d'évacuation. Il est par ailleurs important de noter que si l'orifice d'évacuation est suffisamment grand, il n'y aura pas d'accumulation substantielle d'eau liquide dans la chambre de préparation 3 car elle sera évacuée au fur et à mesure pendant l'étape de pulvérisation d'eau. Le réceptacle à eau 72 comprend avantageusement des moyens pour le vidanger facilement. Le réceptacle à eau 72 peut par exemple être amovible afin que son contenu puisse être déversé facilement dans un évier. Dans d'autres modes de réalisation, le réceptacle à eau peut comprendre des moyens pour être directement raccordé à un circuit d'évacuation d'eaux usées d'une installation domestique.

En vue de réduire encore considérablement le niveau d'humidité dans la chambre de préparation 3, les moyens de chauffe 9 sont activés par le contrôleur 10 après l'étape de pulvérisation d'eau. Les moyens de chauffe 9 sont donc des moyens qui assurent l'essentiel de l'apport thermique permettant un séchage et par la suite une cuisson des aliments se trouvant dans la chambre de préparation 3. Les moyens de chauffe peuvent être de tout type connu de l'homme du métier.

Avantageusement, les moyens de chauffe 9 sont conçus pour générer un flux chauffant, lequel est orienté de façon à frapper sensiblement directement au moins une partie des aliments au sein de la chambre de préparation 3. Par flux chauffant, on désigne ici un faisceau thermique directionnel présentant un caractère dynamique contrôlé de façon positive, tel qu'un flux d'air chaud ou un flux de rayons infrarouges, au contraire par exemple d'un simple effet de convection naturelle pouvant être obtenu par un chauffage purement statique.

Avantageusement, comme illustré schématiquement aux Figures 1-3, les moyens de chauffe 9 sont aptes à produire un flux d'air chaud 90 et comprennent des moyens mobiles de déflection d'air, tels qu'un ventilateur 91 relié par un axe 92 à un moteur électrique 93. Le ventilateur 91 est donc configuré pour générer un flux aéraulique lors de la rotation de l'axe 92, et les moyens de chauffe 9 comprennent alors avantageusement au moins un élément calorifique 94, par exemple de nature résitive. Cet élément calorifique 94 est avantageusement positionné en aval du ventilateur 91, de manière à transformer le flux aéraulique en flux chauffant. Le ventilateur 91 est avantageusement un ventilateur centrifuge et le flux d'air chaud 90 qu'il génère est avantageusement un flux recyclé, c'est-à-dire que l'air chauffé par les moyens de chauffe 9 est de l'air présent à l'intérieur de la chambre de préparation, prélevé pour être chauffé à-travers au moins une ouïe d'entrée 95, et ensuite refoulé dans la chambre de préparation 3 à-travers au moins une ouïe de sortie 96. Cet air chaud propulsé se refroidit au contact des aliments, puis est à nouveau prélevé pour être réchauffé et ainsi de suite. Dans un mode de réalisation avantageux, un seul moteur électrique peut être utilisé à la fois par les moyens de chauffe 9 pour générer un flux d'air et par l'organe de coupe 4 pour effectuer son action de coupe. Dans ce cas de figure, un système de mécanique adapté est mis en œuvre au sein de l'appareil selon l'invention, comprenant par exemple des engrenages ou courroies de transmission, en vue de transmettre l'action du moteur à la fois aux moyens de chauffe 9 et à l'organe de coupe 4.

Dans un mode de réalisation avantageux, le flux d'air chauffant peut être amené dans la chambre de préparation 3 par un système de canalisation comprenant plusieurs conduits de manière à générer plusieurs veines convergeantes d'air chaud. Une telle configuration pour le flux d'air chaud contribue à un excellent échange thermique avec les aliments car elle génère, au point de rencontre des différentes veines, des turbulences favorisant la transmission de chaleur.

Dans le mode de réalisation de l'appareil schématisé aux Figures 1-3, les ouïes d'entrée 95 et de sorties 96 du ventilateur 91 se trouvent avantageusement sur une paroi latérale de la chambre de préparation 3. Le débit du pulvérisateur d'eau durant la phase de pulvérisation d'eau et le dimensionnement des moyens d'évacuation d'eau liquide de la chambre de préparation sont alors choisis de manière à éviter une accumulation d'eau liquide dont le niveau dans la chambre de préparation excéderait la hauteur de l'ouïe d'entrée 95 ou de sortie 96 du ventilateur 91. Cette configuration est avantageuse car elle empêche une pénétration substantielle d'eau liquide dans le circuit aéraulique du ventilateur 91, qui pourrait alors porter préjudice à ce dernier. Dans un mode de réalisation avantageux, l'ouïe d'entrée et/ou de sortie du ventilateur peuvent être munies de moyens d'obturation, tel que des clapets d'obturation, pouvant être dans un état ouvert ou fermé et actionnables par le contrôleur 10. Les clapets d'obturation pourront alors être en position fermée lors de certaines étapes de préparation mises en œuvre par l'appareil selon l'invention, comme par exemple l'étape de pulvérisation d'eau.

Le but de la phase de séchage est donc de réduire l'humidité dans la chambre de préparation 3 en-dessous d'un certain seuil. Il a en effet pu être observé que l'étape ultérieure d'aspersion de matière grasse ne pouvait pas être effectuée sur des parties découpées d'aliments présentant un taux d'humidité trop élevé, sans quoi les propriétés gustatives des aliments préparés par l'appareil selon l'invention ne sont pas satisfaisantes. Le seuil d'humidité sous lequel il est nécessaire de se trouver au moment de l'aspersion de matière grasse peut varier suivant les aliments se trouvant dans la chambre de préparation 3. Par ailleurs, la quantité d'énergie calorifique à apporter à la chambre de préparation pour passer sous ce seuil, et donc la puissance calorifique délivrée par les moyens de chauffe 9 et la durée de la phase de séchage dépendent de la quantité d'eau pulvérisée dans la chambre de préparation, de la quantité des aliments se trouvant dans la chambre de préparation et de leur pouvoir spécifique de rétention d'eau. Le seuil d'humidité à atteindre et donc la quantité d'énergie calorifique à apporter avant la phase d'aspersion de matière grasse en vue de l'optimisation des propriétés gustatives sont avantageusement déterminés empiriquement en fonction de la qualité et de la quantité des aliments introduits dans la chambre de préparation. Par ailleurs, pour certains aliments, il peut être nécessaire de ne pas dépasser une certaine température durant cette phase en vue de préserver leurs propriétés gustatives. Il a par exemple pu être observé que dans le cas de la préparation de chips de pommes de terre, il était préférable de ne pas dépasser une température de 90°C lors de la phase de séchage.

En vue du séchage des aliments, la chambre de préparation 3, qui est une enceinte sensiblement close, comprend par ailleurs avantageusement des moyens de fuite calibrée de vapeur vers l'extérieur. A cette fin, les moyens de fuite calibrée de vapeur comprennent avantageusement au moins un orifice de fuite 12 communiquant avec l'extérieur de la chambre de préparation et dimensionné de façon à :
- évacuer efficacement la vapeur d'eau de la chambre de préparation 3 lors de la phase de séchage ;
- minimiser les pertes d'énergie calorifique en limitant la communication entre la chambre de préparation et l'environnement extérieur ;

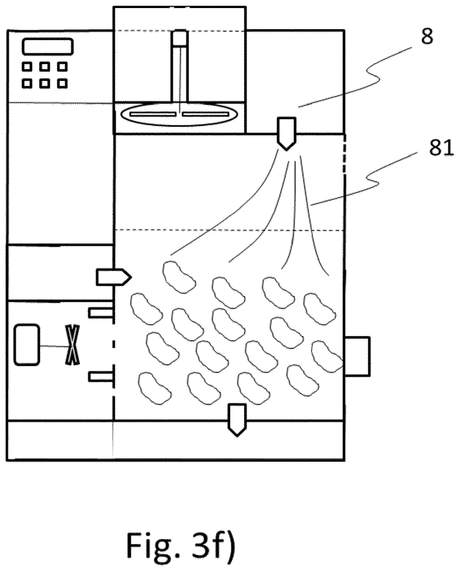

Après la phase de séchage, une étape d'aspersion de matière grasse, qui est avantageusement un liquide visqueux tel que de l'huile et comprenant d'éventuels additifs aromatiques, à l'aide des moyens d'aspersion 8 de matière grasse, représentée à la Figure 3f) est mise en œuvre par l'appareil selon l'invention. Les moyens d'aspersion 8 de matière grasse comprennent un réservoir pour le stockage de la matière grasse et des moyens pour déverser la matière grasse 81 dans la chambre de préparation 3. Conformément à l'invention, la matière grasse est initialement stockée dans les moyens de stockage et est transférée dans la chambre de préparation 3 sous l'action du contrôleur 10 à l'issue de la phase de séchage afin que les parties découpées 5 soient enduites de matière grasse pour le processus de cuisson. L'étape d'aspersion de matière grasse peut par ailleurs être effectuée en plusieurs fois, à savoir être divisée en plusieurs phases espacées dans le temps durant lesquelles une fraction de la quantité de matière grasse totale qui sera délivrée est aspergée sur les parties découpées 5. Cette implémentation de l'aspersion de matière grasse est particulièrement avantageuse dans le cas où les parties découpées sont en mouvement durant l'aspersion de matière grasse, par exemple sous l'action d'un flux d'air chauffant délivré par les moyens de chauffe 9, car elle permet statistiquement une meilleure répartition de la matière grasse sur les différentes parties découpées 5.

De façon avantageuse, les moyens d'aspersion 8 sont reliés fonctionnellement à la chambre de préparation 3 pour pouvoir alimenter la chambre de préparation d'une quantité prédéterminée de matière grasse par mise en mouvement de la matière grasse des moyens de stockage vers et dans la chambre de préparation 3, et ce sous l'action du contrôleur 10. La quantité prédéterminée de matière grasse est avantageusement une dose de matière grasse correspondant à celle nécessaire à l'enduction des parties découpées 5 d'aliments se trouvant dans la chambre de préparation 3. Cette quantité prédéterminée dispensée par les moyens d'aspersion 8 sous l'action du contrôleur 10 dépend avantageusement de la nature et de la quantité des aliments présents dans la chambre de préparation et peut être déterminée empiriquement en vue de l'obtention des meilleures propriétés gustatives pour les aliments préparés à l'aide de l'appareil selon l'invention. Le contrôleur 10 peut alors avantageusement être programmé pour délivrer durant la phase d'aspersion le dosage approprié de matière grasse suivant la nature et la quantité des aliments préparés par l'appareil.

Les informations portant sur la nature et la quantité des aliments, en vue de dispenser une dose adéquate de matière grasse, pourront par exemple être entrées par l'utilisateur dans le contrôleur, via un écran et des boutons prévus sur le contrôleur 10. En ce qui concerne la quantité des aliments préparés, elle pourrait également être évaluée à l'aide de moyens reliés au contrôleur 10 pour mesurer la masse ou le volume des aliments introduits dans le réceptacle 1 ou des parties découpées 5 d'aliments se trouvant dans la chambre de préparation 3 après la phase de découpe. Sur base des informations portant sur la nature et la quantité des aliments préparés, le contrôleur 10, qui peut avantageusement comprendre une mémoire de stockage, peut alors avantageusement dispenser une dose de matière grasse suivant des recettes pré-enregistrées dans cette mémoire de stockage.

Avantageusement, le réservoir de stockage de matière grasse est monté de manière amovible sur l'appareil selon l'invention. Cette mesure technique permet une utilisation particulièrement pratique pour l'utilisateur, qui peut ainsi manipuler aisément le réservoir en vue de son remplissage par une matière grasse, telle que de l'huile par exemple. Cette mesure technique permet également une interchangeabilité du réservoir de stockage. Il est ainsi envisageable que l'utilisateur dispose de différents réservoirs de stockage, se distinguant par exemple par leur capacités volumiques. L'utilisateur peut ainsi choisir, selon la quantité et/ou la qualité des aliments qu'il souhaite préparer, un réservoir de stockage adapté.

Avantageusement, le réservoir de stockage est conçu pour un usage unique exclusivement, et peut présenter éventuellement un caractère jetable. Dans ce cas, l'utilisateur peut se procurer un réservoir de stockage rempli de matière grasse dans le commerce puis le connecter sur son appareil. L'utilisateur peut ainsi bénéficier d'huiles ou de mélanges d'huiles particuliers, éventuellement aromatisés et/ou particulièrement adaptés à tel ou tel aliment. Dans cette configuration, les moyens d'aspersion comprennent des moyens d'accostage en vue de réceptionner le réservoir de stockage et d'établir une communication fluidique entre le contenu du réservoir de stockage et la chambre de préparation 3.

Les moyens d'aspersion 8 sont avantageusement configurés pour dispenser efficacement la matière grasse dans plusieurs directions dans la chambre de préparation 3 en vue d'enduire un maximum de parties découpées 5 d'une pellicule de matière grasse durant la phase d'aspersion. A cet égard, les moyens d'aspersion 8 sont avantageusement disposés pour dispenser la matière grasse depuis la partie supérieure de la chambre de préparation 3 et comprennent avantageusement une pompe et une buse de pulvérisation en vue de disperser la matière grasse au sein de la chambre de préparation 3. La pompe, qui peut éventuellement être une pompe doseuse, est alors avantageusement connectée au contrôleur 10, qui supervise ainsi le déclenchement de de la phase d'aspersion et la quantité de matière grasse dispensée. Dans le cas d'un réservoir de stockage jetable, la pompe ne nécessite pas de moyen de dosage et est avantageusement configurée pour dispenser l'entièreté du contenu de matière grasse du réservoir de stockage durant la phase d'aspersion.

Lorsque le réservoir est un réservoir jetable et que l'appareil est configuré pour dispenser l'entièreté de son contenu durant la phase d'aspersion, le réceptacle 1 peut par ailleurs comprendre des capteurs connectés au contrôleur 10 pour mesurer la masse ou le volume d'aliments introduits dans le réceptacle 1. Le contrôleur 10 peut alors informer l'utilisateur s'il constate une inadéquation entre la quantité d'aliments introduits dans le réceptacle 1 et la quantité de matière grasse du réservoir jetable.

Dans un mode de réalisation avantageux, les moyens d'aspersion 8 de matière grasse peuvent comprendre des moyens de pulvérisation de la matière grasse dans la chambre de préparation 3. Selon un mode de réalisation avantageux, le pulvérisateur d'eau 6 et les moyens d'aspersion 8 de matière grasse peuvent comprendre une unique pompe raccordée fonctionnellement respectivement à un réservoir d'eau et à un réservoir de matière grasse. Dans ce mode de réalisation, la pompe comprend donc une entrée raccordée au réservoir d'eau et une entrée raccordée au réservoir de matière grasse, ces deux réservoirs étant alors avantageusement situés à proximité l'un de l'autre dans l'appareil selon l'invention. Chacune de ces entrées peut être mise en position ouverte ou fermée à l'aide de moyens d'obturation connectés au contrôleur 10. Suivant l'étape mise en œuvre par l'appareil selon l'invention, à savoir la pulvérisation d'eau ou de matière grasse, le contrôleur 10 sélectionne la bonne entrée de la pompe à ouvrir. L'usage d'une seule pompe pour les deux fonctions permet une réduction des coûts de fabrication et de l'encombrement de l'appareil selon l'invention. En ce qui concerne la pulvérisation de l'eau et de la matière grasse, elle peut être effectuée à l'aide d'une unique buse à la sortie de la pompe. Elle peut également être effectuée à l'aide d'une buse de pulvérisation dédiée à la pulvérisation d'eau et d'une autre à celle de matière grasse, auquel cas la pompe comprend alors deux sorties, chacune de celle-ci pouvant être mise en position ouverte ou fermée à l'aide de moyens d'obturation connectés au contrôleur 10.

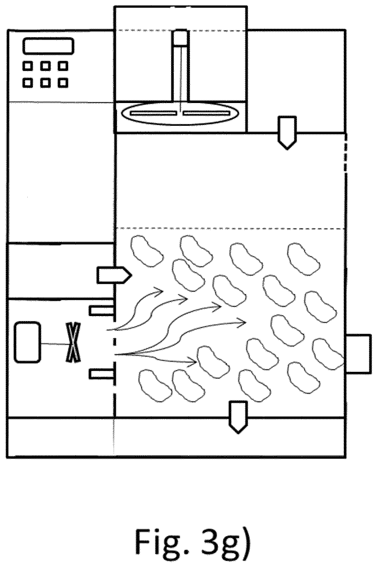

Après l'aspersion de matière grasse, la phase de cuisson en présence de matière grasse est alors mise en œuvre par l'appareil selon l'invention, comme représenté à la Figure 3g). D'un point de vue l'appareil, cette phase est assez similaire à la phase de séchage effectuée avant l'aspersion de matière grasse, car elle est avantageusement réalisée des mêmes moyens de chauffe 9. Les points de consigne pour la puissance calorifique délivrée par les moyens de chauffe 9, de même que la température à atteindre ou encore la durée de la phase de cuisson avant l'arrêt des moyens de chauffe 9 peuvent bien sûr varier suivant la quantité et la qualité des aliments préparés. Le contrôleur 10, qui peut avantageusement comprendre une mémoire de stockage, peut alors avantageusement adapter les paramètres de cuisson suivant des recettes pré-enregistrées dans cette mémoire de stockage.

Il est important de noter que même si sur les illustrations 3a)-h) les moyens de chauffe 9 n'ont été représentés en fonctionnement qu'aux étapes de séchage 3e) et de cuisson 3g), ils peuvent en pratique être en fonctionnement durant certaines autres étapes mises en œuvre par l'appareil selon l'invention, y compris pendant l'intégralité des étapes. Ils peuvent même être mis en fonctionnement en premier lieu, avant même la phase de découpe des aliments, en vue de réaliser un préchauffage de la chambre de préparation 3. Il a par ailleurs pu être observé lorsque les moyens de chauffe 9 sont configurés pour générer un flux d'air chaud, il est avantageux de générer un tel flux d'air chaud durant les phases de pulvérisation d'eau et d'aspersion de matière grasse, car le flux d'air participe participe alors à une bonne répartition respectivement de l'eau et de la matière grasse sur l'ensemble des parties découpées d'aliments, en mettant ces dernières en mouvement Par ailleurs, dans le cas où l'organe de coupe 4 est connecté fonctionnellement au contrôleur 10, ce dernier peut être configuré pour démarrer simultanément les étape de découpe, pulvérisation d'eau et séchage. En effet, une fois les aliments introduits dans le réceptacle 1, l'étape de découpe est en général effectuée très rapidement, en quelques secondes maximum. Il n'est donc pas essentiel de prévoir un décalage entre le démarrage de l'étape de coupe et celle de pulvérisation d'eau.

Selon des modes de réalisation avantageux, l'appareil selon l'invention peut comprendre des sondes reliées au contrôleur 10 pour mesurer la température et/ou l'humidité à l'intérieur de la chambre de préparation 3. La puissance calorifique délivrée par les moyens de chauffe 9 et les durées des étapes de séchage et cuisson peuvent alors être ajustées par le contrôleur 10 sur base des informations récoltées de température et/ou humidité récoltées par lesdites sondes. En effet, la puissance calorifique délivrée peut alors être ajustée en vue d'atteindre des températures de consigne ou des plages de températures pendant des durées déterminées, pendant les différentes étapes mises en œuvre par l'appareil, telles que le préchauffage, le séchage, l'aspersion de matière grasse et la cuisson.

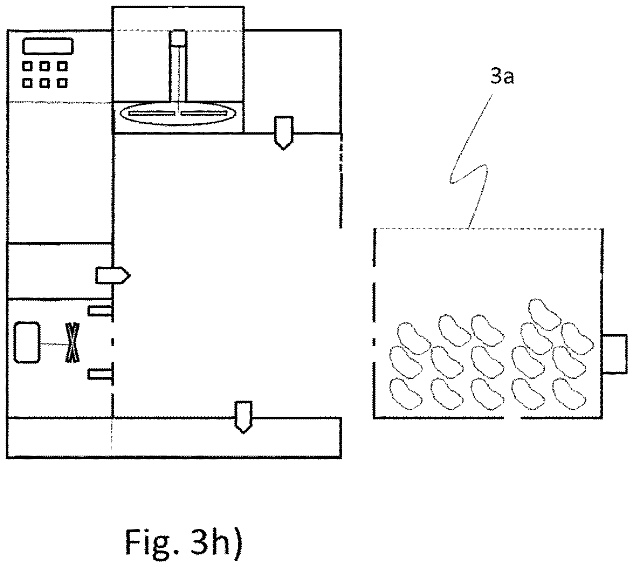

Une fois les étapes de coupe, de pulvérisation d'eau, de séchage, d'aspersion de matière grasse et de cuisson terminées, les moyens de chauffe 9 sont donc arrêtés sous l'action du contrôleur 10. A ce moment, les aliments cuits en parties découpées peuvent être extraits de l'appareil en vue de la consommation. A cet effet, il est avantageux de prévoir que la partie inférieure de la chambre de préparation 3 est une partie amovible 3a), comportant avantageusement une poignée. Les aliments cuits en parties découpées peuvent alors être aisément extraits de l'appareil, en retirant la partie amovible 3a) de l'appareil, tel qu'illustré à la Figure 3h).

Par ailleurs, d'un point de vue structurel, le corps d'appareil forme avantageusement un C autour de la chambre de préparation 3. Le corps d'appareil en C comprend alors avantageusement les moyens d'aspersion de matière grasse et l'organe de coupe dans sa partie horizontale supérieure et les moyens d'évacuation d'eau liquide dans sa partie horizontale inférieure. Les moyens de chauffe 9 et de pulvérisation d'eau se trouvent alors avantageusement dans la partie verticale du C. Le contrôleur peut se trouver sur n'importe quelle partie du C. Dans cette configuration, la chambre de préparation 3 comprend avantageusement une partie 3b) faite d'un matériau flexible et l'appareil selon l'invention comprend alors avantageusement des moyens pour réduire la hauteur de la partie verticale du corps d'appareil. De cette manière, la hauteur de l'appareil selon l'invention peut être réduite lorsqu'il n'est pas utilisé, en vue de le rendre plus compact pour le ranger plus facilement par exemple.

## Revendications

1. Appareil domestique de préparation d'aliments cuits en présence de matière grasse comprenant:
- un réceptacle (1) pour recevoir au moins un aliment cru (2a, 2b) ;
- une chambre de préparation (3) ;
- un pulvérisateur d'eau (6) pour pulvériser de l'eau sur des parties découpées (5) à l'intérieur de la chambre de préparation (3) ;
- des moyens d'évacuation (7) pour évacuer l'eau liquide accumulée dans la chambre de préparation (3) ;
- des moyens de chauffe (9) pour sécher et cuire lesdites parties découpées (5) dans ladite chambre de préparation (3) ;
- un contrôleur (10) connecté au pulvérisateur d'eau (6) et aux moyens de chauffe (9), ledit contrôleur (10) étant configuré pour que ledit appareil de préparation effectue une étape de pulvérisation d'eau sur lesdites parties découpées (5) dans la chambre de préparation (3), une étape de séchage desdites parties découpées (5) et une étape de cuisson desdites parties découpées (5),
l'appareil étant **caractérisé en ce qu'**il comprend en outre :
- au moins un organe de coupe (4) configuré pour découper ledit aliment cru (2a, 2b) en lesdites parties découpées (5) et pour transférer lesdites parties découpées (5) dans la chambre de préparation (3);
- des moyens d'aspersion (8) de matière grasse sur les parties découpées dans la chambre de préparation (3) ;
le contrôleur (10) étant connecté aux moyens d'aspersion (8) de matière grasse, ledit contrôleur (10) étant configuré pour que ledit appareil de préparation effectue une étape d'aspersion de matière grasse sur lesdites parties découpées (5).

2. Appareil selon la revendication 1 dans lequel le pulvérisateur d'eau (6) comprend un réservoir pour recevoir de l'eau, une pompe et une buse de pulvérisation.

3. Appareil selon la revendication 1 dans lequel les moyens d'évacuation (7) comprennent un orifice d'évacuation (71) dans la partie inférieure de la chambre de préparation (3) pour évacuer naturellement l'eau liquide (12) qui s'accumule dans la chambre de préparation (3), l'orifice d'évacuation (71) débouchant dans un réceptacle à eau (72) pour recevoir l'eau évacuée.

4. Appareil selon la revendication 1 dans lequel les moyens de chauffe (9) sont configurés pour générer un flux d'air chaud dans la chambre de préparation (3).

5. Appareil selon la revendication 4 dans lequel les moyens de chauffe comprennent au moins un élément calorifique (94) pour chauffer de l'air à proximité dudit élément calorifique et au moins un ventilateur (91) pour diriger l'air chauffé dans la chambre de préparation (3).

6. Appareil selon l'une quelconque des revendications précédentes, dans lequel l'organe de coupe (4) est configuré pour découper ledit aliment cru (2a, 2b) en parties découpées (5) dans le réceptacle (1), ledit réceptacle (1) se trouvant au dessus de la chambre de préparation (3) et étant configuré pour que lesdites parties découpées (5) tombent sous l'effet de la gravité dans ladite chambre de préparation (3).

7. Appareil selon la revendication 6, dans lequel l'organe de coupe (4) comprend une plaque de coupe (42) actionnable en rotation par un axe (43) relié un moteur électrique (41), ladite plaque de coupe (42) étant munie de trous traversant définis par des bords, lesdits bords comprenant des bords coupants surélevés par rapport à la surface de la plaque de coupe (42), de manière à découper des tranches d'un aliment exerçant une pression contre la surface supérieure de la plaque de coupe (42) lors de la rotation dudit axe (43) et à laisser passer lesdites tranches à travers les trous traversant de ladite plaque de coupe (42).

8. Appareil selon la revendication 7 comprenant des moyens de poussée (11) pour accroître la pression entre l'aliment (2a, 2b) et la plaque de coupe (42).

9. Appareil selon l'une quelconque des revendications précédentes dans lequel l'organe de coupe (4) est connecté fonctionnellement au contrôleur (10) et où l'étape de découpe est déclenchée par ledit contrôleur (10).

10. Appareil selon l'une quelconque des revendications précédentes, dans lequel ladite chambre de préparation (3) comprend un récipient amovible (3a) pour extraire les aliments préparés par ledit appareil.

11. Appareil selon l'une quelconque des revendications précédentes, dans lequel ladite chambre de préparation (3) comprend une partie faite d'un matériau flexible (3b).

12. Appareil selon l'une quelconque des revendications précédentes, dans lequel le contrôleur (10) comprend une mémoire de stockage dans laquelle sont préenregistrées différentes recettes comprenant des valeurs prédéterminées pour la puissance calorifique délivrée par les moyens de chauffe (9) et les durées des étapes de séchage et de cuisson.

13. Appareil selon l'une quelconque des revendications 1 à 11 , comprenant une sonde reliée au contrôleur (10) pour mesurer la température à l'intérieur de la chambre de préparation (3), le contrôleur étant configuré pour ajuster la puissance calorifique délivrée par les moyens de chauffe (9) et les durées des étapes de séchage et cuisson sur base des informations de température récoltées par ladite sonde.

## Patentansprüche

1. Haushaltseinrichtung zur Zubereitung von in Gegenwart von Fett gekochten Lebensmitteln, Folgendes umfassend:
- einen Behälter (1) zur Aufnahme von mindestens einem rohen Lebensmittel (2a, 2b);
- eine Zubereitungskammer (3);
- einen Wasserzerstäuber (6) zum Zerstäuben von Wasser auf geschnittene Teile (5) im Inneren der Zubereitungskammer (3);
- Ausbringungsmittel (7) zum Ausbringen des in der Zubereitungskammer (3) angesammelten flüssigen Wassers;
- Heizmittel (9) zum Trocknen und Kochen der geschnittenen Teile (5) in der Zubereitungskammer (3);
- einen Controller (10), der mit dem Wasserzerstäuber (6) und mit den Heizmitteln (9) verbunden ist, wobei der Controller (10) konfiguriert ist, damit die Zubereitungseinrichtung einen Wasserzerstäubungsschritt auf die geschnittenen Teile (5) in der Zubereitungskammer (3), einen Trocknungsschritt der geschnittenen Teile (5) und einen Kochschritt der geschnittenen Teile (5) durchführt,
wobei die Einrichtung **dadurch gekennzeichnet ist, dass** sie weiter Folgendes umfasst:
- mindestens ein Schneidorgan (4), das konfiguriert ist, um das rohe Lebensmittel (2a, 2b) in die geschnittenen Teile (5) zu schneiden, und um die geschnittenen Teile (5) in die Zubereitungskammer (3) zu überführen;
- -Besprühungsmittel (8) von Fett auf die geschnittenen Teile in der Zubereitungskammer (3);
wobei der Controller (10) mit den Besprühungsmitteln (8) von Fett verbunden ist, wobei der Controller (10) konfiguriert ist, damit die Zubereitungseinrichtung einen Besprühungsschritt von Fett auf die geschnittenen Teile (5) durchführt.

2. Einrichtung nach Anspruch 1, wobei der Wasserzerstäuber (6) einen Behälter zum Aufnehmen von Wasser, eine Pumpe und eine Zerstäuberdüse umfasst.

3. Einrichtung nach Anspruch 1, wobei die Ausbringungsmittel (7) eine Ausbringungsöffnung (71) in dem unteren Teil der Zubereitungskammer (3) umfassen, um das flüssige Wasser (12), das sich in der Zubereitungskammer (3) ansammelt, natürlich auszubringen, wobei die Ausbringungsöffnung (71) in einen Wasserbehälter (72) zum Aufnehmen des ausgebrachten Wassers mündet.

4. Einrichtung nach Anspruch 1, wobei die Heizmittel (9) konfiguriert sind, um einen Warmluftstrom in der Zubereitungskammer (3) zu generieren.

5. Einrichtung nach Anspruch 4, wobei die Heizmittel mindestens ein wärmeerzeugendes Element (94) zum Erwärmen der Luft in der Nähe des wärmeerzeugenden Elements und mindestens einen Lüfter (91) zum Leiten der erwärmten Luft in die Zubereitungskammer (3) umfassen.

6. Einrichtung nach einem der vorstehenden Ansprüche, wobei das Schneidorgan (4) konfiguriert ist, um das rohe Lebensmittel (2a, 2b) in geschnittene Teile (5) im Behälter (1) zu schneiden, wobei sich der Behälter (1) oberhalb der Zubereitungskammer (3) befindet und konfiguriert ist, damit die geschnittenen Teile (5) unter der Wirkung der Schwerkraft in die Zubereitungskammer (3) fallen.

7. Einrichtung nach Anspruch 6, wobei das Schneidorgan (4) eine Schneidplatte (42) umfasst, die durch eine Achse (43), die an einen Elektromotor (41) angeschlossen ist in Drehung zu betätigen, wobei die Schneidplatte (42) mit Durchgangslöchern versehen ist, die durch Ränder definiert werden, wobei die Ränder schneidende Ränder umfassen, die die in Bezug auf die Oberfläche der Schneidplatte (42) erhöht sind, um Scheiben eines Lebensmittels abzuschneiden, das beim Drehen der Achse (43) einen Druck auf die obere Oberfläche der Schneidplatte (42) ausübt, und die die Scheiben durch die Durchgangslöcher der Schneidplatte (42) hindurchzulassen.

8. Einrichtung nach Anspruch 7, Schiebemittel (11) zum Erhöhen des Drucks zwischen dem Lebensmittel (2a, 2b) und der Schneidplatte (42) umfassend.

9. Einrichtung nach einem der vorstehenden Ansprüche, wobei das Schneidorgan (4) betrieblich mit dem Controller (10) verbunden ist und wo der Schneidschritt durch den Controller (10) ausgelöst wird.

10. Einrichtung nach einem der vorstehenden Ansprüche, wobei die Zubereitungskammer (3) einen abnehmbaren Behälter (3a) zum Ausbringen der durch die Einrichtung zubereiteten Lebensmittel umfasst.

11. Einrichtung nach einem der vorstehenden Ansprüche, wobei die Zubereitungskammer (3) einen Teil umfasst, der aus einem flexiblen Material (3b) gefertigt ist.

12. Einrichtung nach einem der vorstehenden Ansprüche, wobei der Controller (10) einen Ablagespeicher umfasst, in dem verschiedene Rezepturen vorab eingespeichert sind, die vorbestimmte Werte für die Wärmeleistung, die von den Heizmitteln (9) abgegeben werden und die Dauern der Trocken- und Kochschritte umfassen.

13. Einrichtung nach einem der Ansprüche 1 bis 11, eine Sonde umfassend, die an den Controller (10) angeschlossen ist, um die Temperatur im Inneren der Zubereitungskammer (3) zu messen, wobei der Controller konfiguriert ist, um die von den Heizmitteln (9) abgegebene Wärmeleistung und die Dauern der Trocken- und Kochschritte auf der Basis der durch die Sonde eingeholten Temperaturinformationen anzupassen.

## Claims

1. A household appliance for preparing food items cooked in the presence of fat comprising:
- a container (1) for receiving at least one raw food item (2a, 2b);
- a preparation chamber (3);
- a water-spraying device (6) for spraying water onto chopped-up parts (5) inside the preparation chamber (3)
- evacuation means (7) for evacuating the liquid water accumulated in the preparation chamber (3);
- heating means (9) for drying and cooking said chopped-up parts (5) in said preparation chamber (3);
- a controller (10) connected to the water-spraying device (6) and to the heating means (9), said controller (10) being configured so that said preparation appliance carries out a step of spraying water onto said chopped-up parts (5) in the preparation chamber (3), a step of drying said chopped-up parts (5) and a step of cooking said chopped-up parts (5);
the appliance being **characterised in that** it further comprises:
- at least one cutting device (4) configured to chop up said raw food item (2a, 2b) into said chopped-up parts (5) and to transfer said chopped-up parts (5) into the preparation chamber (3);
- means (8) for spraying fat onto the chopped-up parts in the preparation chamber (3);
the controller (10) being connected to the means (8) for spraying fat, said controller (10) being configured so that said preparation appliance carries out a step of spraying fat on said chopped-up parts (5).

2. The appliance according to claim 1 wherein the water-spraying device (6) comprises a tank for receiving water, a pump and a spray nozzle.

3. The appliance according to claim 1 wherein the evacuation means (7) comprise an evacuation port (71) in the lower part of the preparation chamber (3) for naturally evacuating liquid water (12) which accumulates in the preparation chamber (3), the evacuation port (71) opening into a water container (72) for receiving the evacuated water.

4. The appliance according to claim 1 wherein the heating means (9) are configured to generate a hot-air-flow in the preparation chamber (3).

5. The appliance according to claim 4 wherein the heating means comprise at least one heating element (94) for heating air in the vicinity of said heating element and at least one fan (91) for directing the heated air into the preparation chamber (3).

6. The appliance according to any one of the preceding claims, wherein the cutting device (4) is configured to chop up said raw food item (2a, 2b) into chopped-up parts (5) in the container (1), said container (1) being located above the preparation chamber (3) and being configured so that said chopped-up parts (5) fall under the effect of the gravity into said preparation chamber (3).

7. The appliance according to claim 6, wherein the cutting device (4) comprises a cutting plate (42) rotatable by a shaft (43) connected to an electric motor (41), said cutting plate (42) being provided with through holes defined by edges, said edges comprising cutting edges raised from the surface of the cutting plate (42), so as to chop up slices of food items exerting pressure against the upper surface of the cutting plate (42) upon rotation of said shaft (43) and to allow said slices to pass through the through holes of said cutting plate (42).

8. The appliance according to claim 7 comprising thrust means (11) for increasing the pressure between the food item (2a, 2b) and the cutting plate (42).

9. The appliance according to any one of the preceding claims wherein the cutting device (4) is operatively connected to the controller (10) and the chopping up step is triggered by said controller (10).

10. The appliance according to any one of the preceding claims, wherein said preparation chamber (3) comprises a removable reservoir (3a) for extracting the food items prepared by said appliance.

11. The appliance according to any one of the preceding claims, wherein said preparation chamber (3) comprises a portion made of a flexible material (3b).

12. The appliance according to any one of the preceding claims, wherein the controller (10) comprises a storage memory in which different recipes including predetermined values for the heating power delivered by the heating means (9) and the durations of the drying and cooking steps are pre-recorded.

13. The appliance according to any one of claims 1 to 11, comprising a probe connected to the controller (10) for measuring the temperature inside the preparation chamber (3), the controller being configured to adjust the heating power delivered by the heating means (9) and the durations of the drying and cooking steps on the basis of the temperature information collected by said probe.
